# EUROPEAN PATENT SPECIFICATION

(11) **EP 2 833 182 B1**
(45) Date of publication and mention of the grant of the patent: **02.09.2020**
(21) Application number: 14178261.5
(22) Date of filing: 24.07.2014
(51) Int. Cl.: G02B 6/44

(54) **Drop box assembly for pole mounting**
Anschlusskasten-Anordnung für Pfostenmontage
Ensemble de boîtier de derivation pour fixation de poteau

(30) Priority: 30.07.2013 IT MI20131275
(43) Date of publication of application: 04.02.2015
(73) Proprietor: Prysmian S.p.A., 20126 Milano (IT)
(72) Inventor: Roberts, Kris Jonathan, 20126 Milano (IT)
(74) Representative: Maccalli, Marco

(56) References cited:
- US-A1- 2005 029 419
- US-A1- 2009 263 097
- US-B1- 6 486 399

## Description

### Background of the invention

### Field of the invention

The present invention generally relates to optical telecommunications networks. More specifically, the present invention relates to a drop box assembly suitable for pole mounting, i.e. an optical fiber cable drop box assembly suitable for being fixed to poles of an aerial optical network or to poles of a BTS ("base transceiver station").

### Overview of the related art

In optical telecommunications networks, drop boxes are designed for the splicing of optical cables, e.g. to bring optical distribution cables to the premises of the users. Drop boxes generally have a cover that can be removed or swivelled open for accessing the drop box inner space during optical fiber splicing and maintenance. Multiple cable entry points are provided, for optical cables of different diameters, ranging to up to 18 mm.

US 2004/062508 discloses a telecom box comprising a base and a protective cover movably attached to the base. The cover is attached to the base by a series of hinges located along one side of the base. The base comprises a continuous sidewall which defines an interior cavity for receiving optical components. At the bottom of the sidewall there is a plurality of entry ports in communication with the interior cavity defined by the base to permit fiber optic cables, as will be described hereinafter, to be routed into box. The base further comprises one or more feet for mounting the box in a known manner to a wall or other building structure at the subscriber premises.

WO 2012/138856 discloses a box including a base unit and a door which has a hinged connection to the base unit. A drop cable entrance at the bottom of the base unit is configured to receive a drop cable from an optical service provider. Inside of the box, drop cables are split into feeder breakout cables and converted into multiple distribution cables which are connected in or to the individual units and exit from the bottom of the box itself. In order to fix the box to a wall/pole, the base unit has holes for receiving screws.

US 2009/263097 discloses a fiber distribution hub (FDH) that includes an enclosure and brackets with provisions to be mountable in multiple configurations. More particularly, the FDH is mountable in multiple configurations to a pole. The brackets are rearrangeable to provide the mounting configuration with either a short or extended offset between an FDH cabinet and the pole. US 6 486 399 discloses a pole mount cabinet for housing and supporting an article on a pole includes a housing having a rear wall and defining a chamber. The housing defines a rear opening in the rear wall. A mounting and support framework is adapted to be secured to the pole and includes at least one support member extending horizontally. The support member extends through the rear opening and into the chamber. The article can be positioned in the chamber such that it is supported by the support member.

### Summary of the invention

The Applicant has observed that known drop boxes do not have a design that is satisfactory for their mounting to poles.

The known drop boxes are generally quadrangular (rectangular, or square) prisms in shape, hence their rear wall (which faces the poles when the drop boxes are mounted thereto) is essentially flat. The poles are instead generically cylindrical. The lack of matching with the pole shape makes the drop box fixation inherently not firm. This problem is not solved even by the use of metal brackets and steel bands to strap the brackets to the pole.

Another problem of known drop boxes is that the poles are often very crowded, due to the presence of different drop boxes from various telecom operators. When a drop box is mounted to the pole above another drop box, the cables of the upper drop box are caused to turn around the lower drop box, running the risk of unsuitable bending.

Still another problem is that with known drop boxes, the fixing elements (e.g., screws) used to mount the drop box (or the metal bracket) to the pole remain visible and easily accessible from the exterior, and thus at the mercy of vandals or thieves.

The Applicant has faced the problem of providing a drop box assembly having an improved design making it better suited to the mounting on poles.

In view of the above, the Applicant has found a drop box assembly comprising a base and a holding part fixable to the pole having a structure embracing the pole and providing free covered spaces for allowing passage of cables close to the pole.

In particular, the Applicant found a drop box assembly comprising a drop box having entrances for optical drop cables and exits for optical distribution cables; a drop box holding part comprising a plate and two opposed wings departing from the plate for embracing a generically cylindrical support member, and cooperating engagement elements provided on the drop box and the drop box holding part for mechanically coupling the drop box to the drop box holding part in order to allow a steady fixing of the whole drop box assembly to the pole.

Advantageously, since the drop box holding part is blocked from movement to the pole by the action of the two opposed wings, unexpected rotations around an orthogonal axis with respect to the pole axis are avoided.

Preferably, the drop box assembly comprises through holes formed in the plate of the drop box holding part for receiving fixation elements for the fixation of the drop box holding part to the cylindrical support member.

Preferably, the through holes are arranged so as to remain hidden by the drop box when the drop box is coupled to the drop box holding part.

Preferably, the cooperating engagement elements comprises at least one insertion slot formed on the drop box and a corresponding insertion member formed on the drop box holding part, the insertion member being adapted to fit in the insertion slot.

Preferably, the drop box assembly comprises holes formed in the insertion slot and in the insertion member for receiving securing elements for securing the drop box to the drop box holding part.

Preferably, the wings are tapered such that a space between the wings increases in moving away from the plate.

Preferably, when the drop box is coupled to the drop box holding part, the wings of the drop box holding part are essentially flush with side walls of the drop box.

### Brief description of the drawings

These and other features and advantages of the present invention will be made evident by the following detailed description of an exemplary, non-limitative embodiment thereof, description that, for a better intelligibility, should be read making reference to the attached drawings, wherein:
**Figure 1** shows in isometric view from the front a drop box assembly according to an embodiment of the present invention, comprising a drop box and a drop box holding part;
**Figure 2** shows the drop box assembly of **Figure 1** from below;
**Figure 3** shows in isometric view from the rear the drop box assembly of **Figure 1****;**
**Figure 4** shows in isometric view the drop box holding part of the drop box assembly of **Figure 1****,** separated from the drop box;
**Figure 5** shows in isometric view the drop box of the drop box assembly of **Figure 1****,** separated from the drop box holding part, and
**Figure 6** schematizes the drop box assembly mounted to a pole.

### Detailed description of an exemplary embodiment of the invention

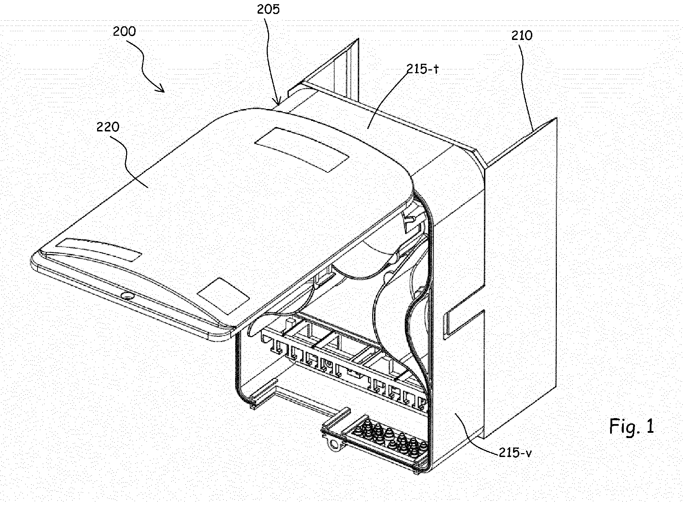

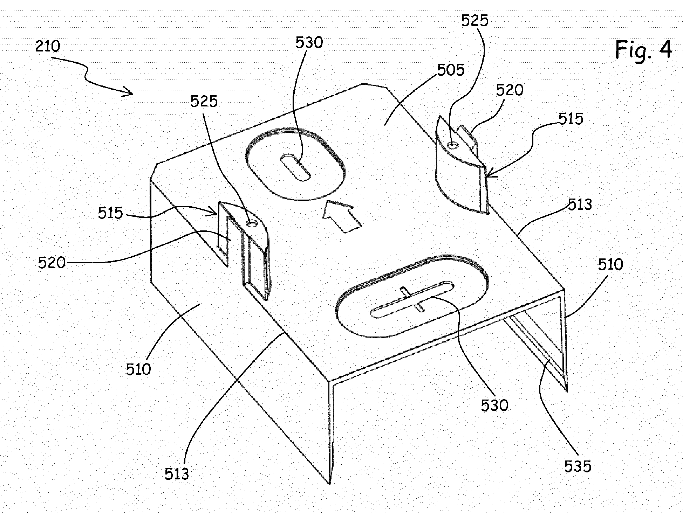

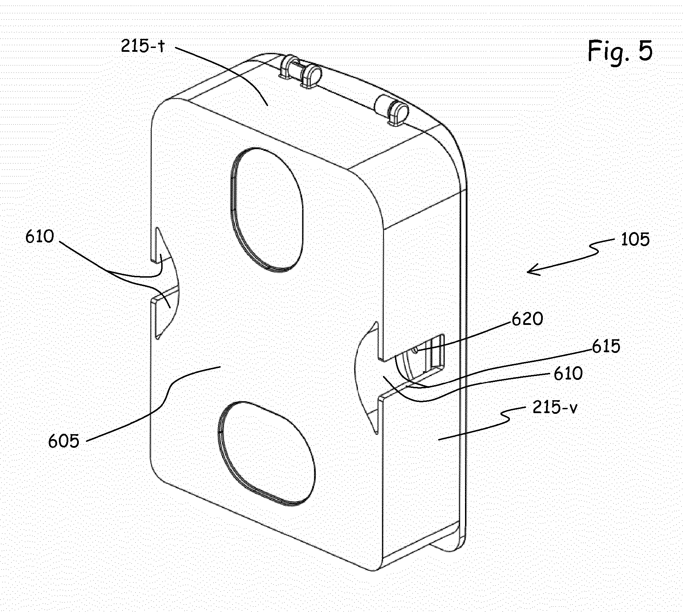

Making reference to **Figures 1** to **6**, a drop box assembly **200** according to an embodiment of the present invention comprises a drop box **205** and a drop box holding part **210.**

The drop box **205** is a quadrangular (e.g., rectangular or square) box, e.g. made of plastic, having entrances **305** for drop optical cables (not shown), and exits **310** for distribution optical cables (also not shown). Inside the drop box **205,** cable routing members (designed for properly routing the optical cables while ensuring a proper, not excessive bending thereof) and optical fiber splicing members, e.g. splice trays are provided.

The drop box **205** has a rear wall **605,** four side walls **215** and, at the front, a lid **220** for selectively allowing access to the drop box **205** inner space. The lid **220** is for example hinged to one of the side walls **215,** e.g. to the side wall **215-t** that, in use (i.e., when the drop box **205** is mounted to a pole), is at the top, so as to be swivable open/close. However, the lid may be a separable part that, for gaining access to the inner space of the drop box **205,** is removable from the latter. Preferably, the lid **220** can be secured to the body of the drop box **205** to be locked in the closed position, e.g. by means of a screw. The entrances **305** and exits **310** for the optical cables are preferably formed in a side wall **215-b** that in use is at the bottom.

The drop box **205,** which can be formed by plastic material moulding, is shaped so as to define first engagement elements intended to co-operate with second engagement elements provided on the drop box holding part **210.**

In the considered example shown in the drawings, the first engagement elements provided on the drop box **205** comprise according to the invention a pair of parallel insertion slots **610** extending longitudinally from the rear wall **605** towards the front of the drop box **205,** e.g. essentially midway along two opposite side walls **215,** preferably the side walls **215** that, in use, extends in the vertical direction. The two insertion slots **610** are open at the rear wall **605.** The two insertion slots **610** are also partially open along their length, a window **615** being formed for this purpose in each of the side walls **215-v,** the window **615** extending from the rear wall **605** for a relevant portion of the side walls **215-v.** The portions of the side walls **215-v** at the sides of the windows **615** define shoulders for retaining the second engagement elements provided on the drop box holding part **210,** which will be described shortly hereafter. Opposite to the windows **615,** the insertion slots **610** preferably have an arc-shaped wall.

Other engagement elements constructions can be provided depending on the specific needs and material used.

The two insertion slots **610** are preferably closed (i.e., they are blind) at their ends opposite to the insertion slots openings at the rear wall **605.** Advantageously, for firmly attaching the drop box **205** to the drop box holding part **210,** through holes **620** formed in the blind end of the insertion slots **610** for screwing the drop box **205** to the drop box holding part **210** once the two components are coupled to each other are provided.

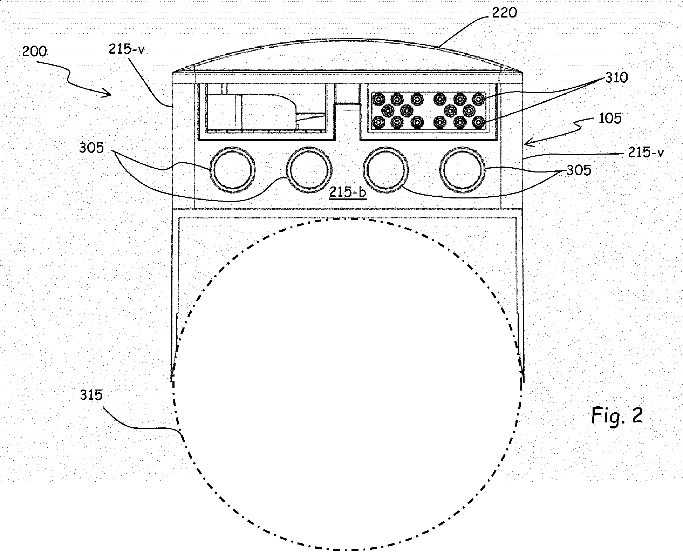

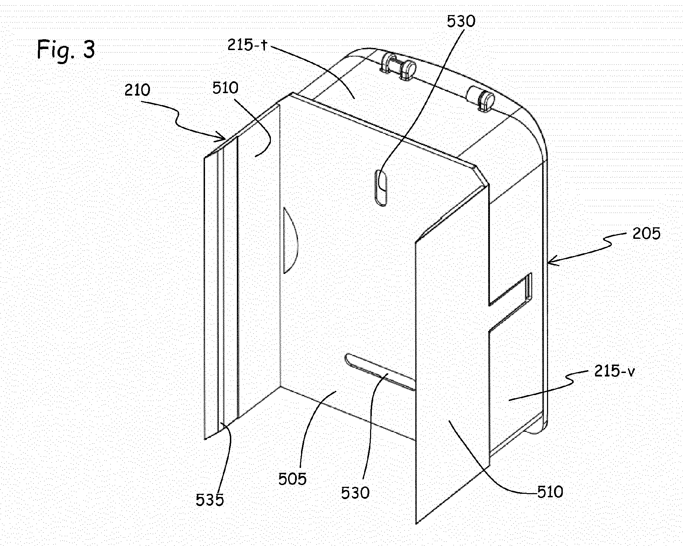

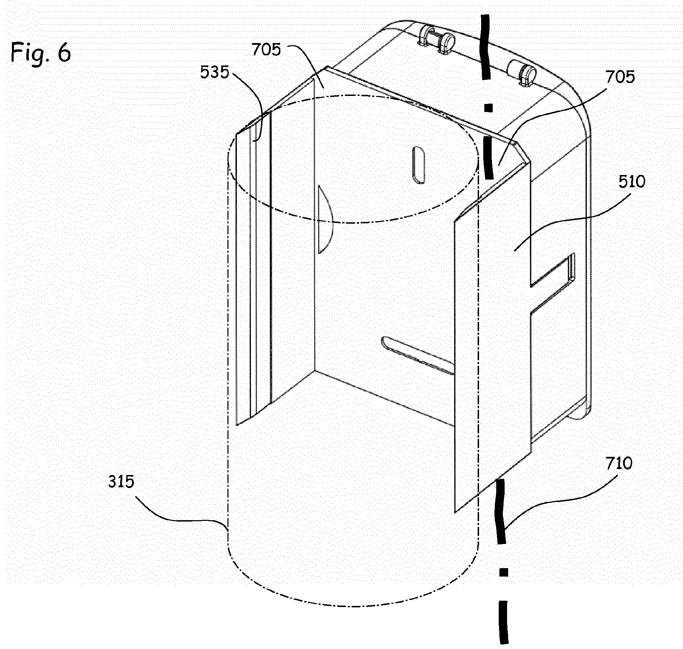

With reference to the example shown in **Figure 3**, the drop box holding part **210** comprises a first wall **505** defining a plate of size and shape generally matching the size and shape of the rear wall **605** of the drop box **205.** Two second walls **510** departs essentially perpendicularly from two opposite edges **513** of the first wall **505,** to define a pair of wings designed for embracing a pole, like the pole schematically sketched in **Figures 2** and **6** in dash-and-dot lines and denoted with reference number **315.** The first wall **505** of the drop box holding part **210** abuts the rear wall **605** of the drop box **205** when the two components are coupled to each other.

The second engagement elements provided on the drop box holding part **210** comprise a pair of pillars **515,** projecting from the first wall **505** of the drop box holding part **210** in the opposite direction with respect to the second walls **510,** and designed for engaging the two insertion slots **610** formed in the drop box **205.** The two pillars **515** are provided along the two opposite edges **513** of the first wall **505,** e.g. essentially midway along the two opposite edges **513,** in a position matching the position of the two insertion slots **610.** The shape of the pillars **515** matches (being complementary to) the shape of the insertion slots **610,** and in the considered example are arc-shaped, with the convexity facing towards the center of the first wall **505,** reproducing the shape of the arc-shaped wall of the insertion slots **610.** The walls of the pillars **515** forming the chord of the arc have a raised central portion **520** that is essentially flush with the respective second wall **510.** Threaded holes **525** are preferably formed in the top of the pillars **515,** for receiving screws for screwing the drop box **205** to the drop box holding part **210.** Preferably, the through holes **620** of the insertion slots **610** and the threaded holes **525** of the pillars **515** are arranged coaxially.

Two through holes **530,** preferably in the form of slots elongated in mutually orthogonal directions, are formed in the first wall **505** of the drop box holding part **210** for the insertion of screws or studs for the fixation of the drop box holding part **210** to a pole.

Preferably, in order to be adaptable to poles of (slightly) different diameters, the second walls **510** of the drop box holding part **210** (which, as mentioned above, forms two wings that embrace the pole) are tapered, either continuously or step-wise, having a thickness that, beginning from a certain distance from the first wall **505,** decreases progressively or step-wise. In an embodiment of the present invention, one or more breaking lines **535** are formed along the two second walls **510** to enable breaking and removal of terminal portions of the second walls **510** for accommodating poles of smaller diameter.

In use, the drop box holding part **210** is leant against a pole with the two second walls **510** embracing the pole. The drop box holding part **210** is then fixed to the pole, e.g. by screwing (inserting screws into the through holes **530**). Once fixed to the pole, the drop box holding part **210** is ready to receive a drop box **205.**

To mount the drop box **205** to the drop box holding part **210,** the drop box **205** is brought close to the holding part **210** with the drop box rear wall **605** facing the first wall (plate) **505** of the holding part **210.** The two insertion slots **610** of the drop box **205** are aligned to the pillars **515** projecting from the first wall **505** of the holding part **210,** and the drop box **205** is then pushed towards the pole so that the two pillars **515** enters into the insertion slots **610,** until the top of the pillars **515** abuts the blind end of the insertion slots **610.** The raised central portions **520** of the pillars **515** close the windows **615** in the side walls **215-v** of the drop box **205.** The drop box **205** is then securely fixed to the holding part **210** by screws inserted into the holes **620,** that engage the threaded holes **525** formed at the top of the pillars **515.** The installation of the drop box **205** is thus completed: the drop box **205** is ready for the insertion of optical cables and for the necessary optical fiber splicing operations.

Advantageously, fixation elements for fixing the drop box assembly to the pole, in the example the screws that are inserted into the through holes **530** formed in the drop box holding part **210,** are completely hidden once the installation of the drop box assembly is completed, being invisible from outside.

Thanks to the wings **510** of the drop box holding part **210** that embrace the pole, the fixation of the drop box assembly to the pole is stable. Thanks to the adaptability of the holding part **210** to poles of variable diameter, the stability of the fixation is ensured irrespective of the pole diameter.

The wings **510** of the drop box holding part **210** that embrace the pole are essentially flush with the side walls **215-v** of the drop box.

As another advantage, when the drop box holding part **210** is mounted to the pole, two generically triangular gaps **705** are left in the region of the edges **513** of the first wall **505,** where the second walls **510** depart from the first wall **505.** These gaps **705** are useful as guideways for the optical cables of different drop boxes mounted to the same pole that run along the pole. The optical cables can be passed behind the drop box holding part **210,** as schematized in **Figure 6** by the cable **710,** and this helps keeping the cables in position, tidy. Moreover, thanks to the presence of the gaps **705,** cables are maintained always covered in the area of the wings **510** where, in the case of cable splicing, they can be protected in said gaps **705** from undesired external access.

## Claims

1. A drop box assembly (**200**) for pole mounting comprising:
- a drop box (**205**) having entrances (**305**) for optical drop cables and exits (**310**) for optical distribution cables;
- a drop box holding part (**210**) comprising a plate (**505**) and two opposed wings (**510**) departing from the plate for embracing a generically cylindrical support member (**315**),
- cooperating engagement elements (**610,515**) provided on the drop box (**205**) and the drop box holding part (**210**) for mechanically coupling the drop box (**205**) to the drop box holding part (**210**),
**characterized in that** the cooperating engagement elements (**610,515**) comprising at least one insertion slot (**610**) formed on the drop box (**205**), and a corresponding insertion member (**515**) formed on the drop box holding part (**210**), the insertion member (**515**) being adapted to fit in the insertion slot (**610**), the cooperating engaging elements comprise a pair of parallel insertion slots extending longitudinally in side walls (215) from a rear wall (605) of the drop box towards the front of the drop box (205).

2. The drop box assembly of claim 1, comprising through holes (**530**) formed in the plate (**505**) of the drop box holding part (**210**) for receiving fixation elements for the fixation of the drop box holding part (**210**) to the cylindrical support member.

3. The drop box assembly of claim 2, wherein said through holes (**530**) are arranged so as to remain hidden by the drop box when the drop box (**205**) is coupled to the drop box holding part (**210**).

4. The drop box assembly according to any one of the preceding claims 4, comprising holes (**620,525**) formed in the insertion slot (**610**) and in the insertion member (**515**) for receiving securing elements for securing the drop box (**205**) to the drop box holding part (**210**).

5. The drop box assembly according to any one of the preceding claims, wherein said wings (**510**) are tapered such that a space between the wings (**510**) increases in moving away from the plate (**505**).

6. The drop box assembly according to any one of the preceding claims, wherein when the drop box (**205**) is coupled to the drop box holding part (**210**), the wings of the drop box holding part (**210**) are essentially flush with side walls (**215-v**) of the drop box (**205**).

## Patentansprüche

1. Eine Anschlusskasten-Anordnung (200) zur Pfostenmontage, bestehend aus:
- einem Anschlusskasten (205) mit Eingängen (305) für optische Anschlusskabel und Ausgängen (310) für optische Verteilerkabel;
- ein Anschlusskastenhalteteil (210), das eine Platte (505) und zwei gegenüberliegende Flügel (510) umfasst, die von der Platte ausgehen, um ein im Allgemeinen zylindrisches Stützelement (315) zu umgreifen,
- zusammenwirkende Eingriffselemente (610, 515), die an dem Anschlusskasten (205) und dem Anschlusskastenhalteteil (210) vorgesehen sind, um den Anschlusskasten (205) mechanisch mit dem Anschlusskastenhalteteil (210) zu koppeln, **dadurch gekennzeichnet, dass** die zusammenwirkenden Eingriffselemente (610, 515) mindestens einen an dem Anschlusskasten (205) ausgebildeten Einführungsschlitz (610) und ein entsprechendes an dem Anschlusskastenhalteteil (210) ausgebildetes Einführungselement (515) umfassen, wobei das Einführungselement (515) so angepasst ist, dass es in den Einführungsschlitz (610) passt, wobei die zusammenwirkenden Eingriffselemente ein Paar von parallelen Einführungsschlitzen, die sich in Längsrichtung in den Seitenwänden (215) von einer Rückwand (605) des Anschlusskastens zur Vorderseite des Anschlusskastens (205) erstrecken.

2. Anschlusskasten-Anordnung nach Anspruch 1, umfassend Durchgangslöcher (530), die in der Platte (505) des Anschlusskastenhalteteils (210) ausgebildet sind, um Befestigungselemente zur Befestigung des Anschlusskastenhalteteils (210) an dem zylindrischen Trägerelement aufzunehmen.

3. Anschlusskasten-Anordnung nach Anspruch 2, bei der die Durchgangslöcher (530) so angeordnet sind, dass sie durch den Briefkasten verborgen bleiben, wenn die Anschlusskasten-Anordnung (205) mit dem Anschlusskastenhalteteil (210) verbunden ist.

4. Anschlusskasten-Anordnung nach einem der vorhergehenden Ansprüche, umfassend Löcher (620, 525), die in dem Einführungsschlitz (610) und in dem Einführungselement (515) zur Aufnahme von Befestigungselementen zur Befestigung des Anschlusskastens (205) an dem Anschlusskastenhalteteil (210) ausgebildet sind.

5. Anschlusskasten-Anordnung nach einem der vorstehenden Ansprüche, wobei die Flügel (510) so verjüngt sind, dass sich ein Zwischenraum zwischen den Flügeln (510) bei der Bewegung weg von der Platte (505) vergrößert.

6. Anschlusskasten-Anordnung nach einem der vorstehenden Ansprüche, **dadurch gekennzeichnet, dass** wenn der Anschlusskasten (205) mit dem Anschlusskastenhalteteil (210) gekoppelt ist, die Flügel des Anschlusskastenhalteteils (210) im Wesentlichen bündig mit den Seitenwänden (215-v) des Anschlusskastens (205) sind.

## Revendications

1. Ensemble de boîtier de dérivation (**200**) pour montage sur poteau comprenant :
- un boîtier de dérivation (**205**) présentant des entrées (**305**) pour câbles de dérivation optiques et des sorties (**310**) pour câbles de distribution optiques ;
- une pièce de maintien de boîtier de dérivation (**210**) comprenant une plaque (**505**) et deux ailes (**510**) opposées partant de la plaque pour envelopper un élément de support (**315**) génériquement cylindrique,
- des éléments de prise en coopération (**610, 515**) fournis sur le boîtier de dérivation (**205**) et la pièce de maintien de boîtier de dérivation (**210**) pour coupler mécaniquement le boîtier de dérivation (**205**) à la pièce de maintien de boîtier de dérivation (**210**),
**caractérisé en ce que** les éléments de prise en coopération (**610, 515**) comprennent au moins une fente d'insertion (**610**) formée sur le boîtier de dérivation (**205**), et un élément d'insertion (**515**) correspondant formé sur la pièce de maintien de boîtier de dérivation (**210**), l'élément d'insertion (**515**) étant adapté pour s'insérer dans la fente d'insertion (**610**), les éléments de prise en coopération comprennent une paire de fentes d'insertion parallèles s'étendant longitudinalement dans des parois latérales (215) depuis une paroi arrière (605) du boîtier de dérivation vers l'avant du boîtier de dérivation (205).

2. Ensemble de boîtier de dérivation selon la revendication 1, comprenant des trous traversants (**530**) formés dans la plaque (**505**) de la pièce de maintien de boîtier de dérivation (**210**) pour recevoir des éléments de fixation pour la fixation de la pièce de maintien de boîtier de dérivation (**210**) à l'élément de support cylindrique.

3. Ensemble de boîtier de dérivation selon la revendication 2, dans lequel lesdits trous traversants (**530**) sont agencés de manière à rester cachés par le boîtier de dérivation lorsque le boîtier de dérivation (**205**) est couplé à la pièce de maintien de boîtier de dérivation (**210**).

4. Ensemble de boîtier de dérivation selon l'une quelconque des revendications précédentes, comprenant des trous (**620, 525**) formés dans la fente d'insertion (**610**) et dans l'élément d'insertion (**515**) pour recevoir des éléments de solidarisation pour solidariser le boîtier de dérivation (**205**) à la pièce de maintien de boîtier de dérivation (**210**).

5. Ensemble de boîtier de dérivation selon l'une quelconque des revendications précédentes, dans lequel lesdites ailes (**510**) sont effilées de sorte qu'un espace entre les ailes (**510**) augmente en s'éloignant de la plaque (**505**).

6. Ensemble de boîtier de dérivation selon l'une quelconque des revendications précédentes, dans lequel lorsque le boîtier de dérivation (**205**) est couplé à la pièce de maintien de boîtier de dérivation (**210**), les ailes de la pièce de maintien de boîtier de dérivation (**210**) sont sensiblement affleurantes avec les parois latérales (**215-v**) du boîtier de dérivation (**205**).
